# EUROPEAN PATENT SPECIFICATION

(11) **EP 3 936 326 B1**
(45) Date of publication and mention of the grant of the patent: **09.10.2024**
(21) Application number: 21184207.5
(22) Date of filing: 07.07.2021
(51) Int. Cl.: B32B 3/08, B32B 3/26, B32B 7/12, B32B 17/10, E06B 3/54, A47B 13/00

(54) **MULTILAYER PANEL WITH ATTACHMENT ELEMENTS**
MEHRSCHICHTIGES PANEEL MIT BEFESTIGUNGSELEMENTEN
PANNEAU MULTICOUCHE AVEC DES ÉLÉMENTS DE FIXATION

(30) Priority: 07.07.2020 IT 202000016339
(43) Date of publication of application: 12.01.2022
(73) Proprietor: Agostinis Vetro S.r.l., 33020 Zuglio (UD) (IT)
(72) Inventor: Agostinis, Luca, 33020 Zuglio (UD) (IT)
(74) Representative: Petraz, Gilberto Luigi

(56) References cited:
- EP-A1- 2 583 822
- DE-C- 732 014
- US-A- 4 793 112
- US-B1- 6 484 649

## Description

### FIELD OF THE INVENTION

Embodiments described here concern a multilayer panel provided with one or more attachment elements. In particular, the invention concerns a panel comprising at least two layers of rigid material, for example glass, or other materials, attached to each other, usually used for covering structural elements of buildings, such as walls, vestibules or others, or for covering furnishing elements, for example tables. The attachment elements are integrated into the panel.

### BACKGROUND OF THE INVENTION

Covering panels made of rigid material have long been used to cover architectural building elements, for example internal or external walls, or also to cover furnishing elements such as bedside tables, tables, desks and suchlike.

Sometimes, the panel functions as a support surface, such as for example in the case of a desk or table. In this case, the advantage derived from the use of the panel is often of an aesthetic nature.

Among the panels used for covering or support purposes, those made of glass are particularly appreciated for their qualities of beauty and elegance, or for their robustness that allows them to be used as a reinforcement plate for a covering plate in a different and fragile material.

To be used in covering panels in the building trade, the glass plates must have a predetermined thickness, possibly based on the length and width of the glass plate. The thickness of the plate can increase with its lateral sizes, in order to guarantee a certain solidity to the glass plate.

At the time of their installation, the panels are attached to a bearing structure, for example the legs of a table or desk, or brackets attached to a wall.

The panels are attached to the bearing structures by means of bushings which are glued to the panels, and which in turn are attached to the bearing structure, for example by means of a threaded through hole made in the bearing structure.

One disadvantage of this attachment solution is that its strength depends on the gluing of the bushings to the panel. The gluing is usually not strong enough to ensure a stable long-term attachment. In fact, sometimes the bushings become unglued from the panel, for example due to stress caused by situations of prolonged fatigue or by variations in environmental conditions, in particular variations in temperature or pressure.

In general, this attachment solution also has the disadvantage of resulting in one or more bushings that protrude from the plane of the front plate of the panel, which can be considered not very aesthetic.

Document US 4,793,112 describes a laminated glass panel comprising an attachment screw inserted into a seating or bushing provided through in one of the plates and disposed protruding with respect thereto.

Document EP2583822 A1 describes a laminated glass panel, comprising two glass plates and a truncated cone-shaped attachment plate, which is inserted into a mating shaped seating made through in one of the plates and is disposed protruding with respect to the latter. The panel described in EP2583822 A1 also comprises a layer of plastic material disposed between the two glass plates.

US2005/188634 A1 describes a panel comprising a first and a second glass plate separated by an intermediate polymeric layer, and an attachment element inserted into the intermediate layer and disposed in a through manner through a cylindrical hole provided in the second glass plate. US 6 484 649 B1 discloses a multilayer panel comprising a covering plate, a reinforcing plate, and an attachment element.

There is therefore a need to perfect a multilayer panel which can overcome at least one of the disadvantages of the state of the art.

In particular, one purpose of the present invention is to provide a multilayer panel, equipped with at least one glass plate which acts as a reinforcing plate, which can be attached in a stable and secure manner over time.

Another purpose is to provide a multilayer panel which allows the covering plate to be left intact.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, hereafter we describe embodiments of a multilayer panel which overcomes the limits of the state of the art and eliminates the defects present therein.

In accordance with some embodiments, a multilayer panel is provided comprising a covering plate and at least one reinforcing plate. The latter is associated with the covering plate. In particular, the covering plate and the reinforcing plate are coupled to each other in correspondence with a respective surface or face thereof. In other words, the covering plate and the reinforcing plate are overlapping, not adjacent.

The multilayer panel comprises one or more attachment elements, placed in correspondence with as many attachment points, for its attachment to a support structure. The one or more attachment elements is/are inserted in the reinforcing plate only.

The covering plate is not modified, at least in correspondence with its surfaces.

The attachment element is disposed flush, or possibly recessed, with respect to the external surface of the reinforcing plate.

The panel comprises one or more seatings to house the attachment elements. More preferably, these seatings are made only in the reinforcing plate. The seatings each comprise a hole made through the reinforcing plate. The seatings are advantageously closed, at their bottom, by the covering plate.

The attachment element and the seating are provided with respective rotation blocking means, configured to engage with each other to block the attachment element, preventing a rotation thereof around its axis of development. Thanks to the rotation blocking means, it is easier to insert a screw in the attachment element and screw it thereto when the attachment element is inserted between the two plates, and therefore it is no longer accessible for an operator, making the assembly operations easier and faster.

According to some embodiments, each seating comprises a first portion which extends from the free surface of the reinforcing plate to an intermediate section of the seating, and a second portion, or bottom portion, which extends from the above said intermediate section to the bottom of the seating.

Advantageously, the second portion is configured so as to form at least one abutment element to abut the attachment element, more advantageously an abutment counter-element of the attachment element, and prevent it from coming out of the seating. More advantageously, the second portion has at least one section the lateral size of which is larger than the lateral size of the intermediate section. Even more advantageously, the second portion has a truncated conical shape diverging from the intermediate section to the bottom of the seating.

By lateral size we mean the greater distance between two perimeter points taken in a same section perpendicular to the axis of development of the seating.

Preferably, the first portion of the seating is cylindrical.

Preferably, the attachment element comprises as well a first portion that extends from a first end thereof to an intermediate section thereof, and a second portion that extends from the same intermediate section to a second end thereof. More preferably, the second portion comprises at least one section the lateral size of which is larger than the lateral size of the first portion. Even more preferably, the second portion of the attachment element has a truncated cone shape that diverges from the intermediate section to the second end.

It is desirable for the second portion of the attachment element to have a shape and length that correspond to the shape and length of the second portion of the seating. Even more appropriately, the shape and sizes of the attachment element correspond to the shape and sizes of the seating.

More appropriately, the seating and the attachment element have shapes that correspond to each other, so as to obtain a same-shape coupling.

Preferably, the first portion of the seating and the first portion of the attachment element have shapes that correspond to each other, and the second portion of the seating and the second portion of the attachment element have shapes that correspond to each other.

Advantageously, the attachment element comprises a bushing provided with a threaded hole.

In accordance with some embodiments, the multilayer panel also comprises an interlayer disposed between the reinforcing plate and the covering plate. Preferably, the interlayer comprises a sheet of plastic material.

According to one aspect, there is also provided a method to assemble a multilayer panel, which comprises the steps of supplying a covering plate, supplying a reinforcing plate provided with one or more through seatings, inserting an attachment element in each of the seatings, and subsequently associating the reinforcing plate and the covering plate. This association determines the closure of the seatings. Moreover, during the insertion of the attachment element, the method provides to engage respective rotation blocking means with each other, respectively provided on the attachment element and in the seating in order to prevent a rotation of the attachment element around an axis of development thereof.

According to one aspect of the invention, the method provides to insert the attachment element flush with, or at most recessed with respect to, the external surface of the reinforcing plate. This conformation allows to prepare the panel directly in a first site and transport it in assembled form to a second site, where it can be associated with respective supports by means of screws inserted and screwed into each attachment element.

It can be provided that the reinforcing plate is not provided with the insertion seatings. In this case, it is provided to make one or more insertion seatings in the reinforcing plate, obviously before inserting the attachment elements.

Preferably, the attachment element and the seating have shapes that correspond to each other, so as to obtain a same-shape coupling.

Advantageously, the attachment element comprises a bushing provided with a threaded hole.

Preferably, the method also comprises, before the step of associating the reinforcing plate with the covering plate, a step of disposing an interlayer between the reinforcing plate and the covering plate.

Some embodiments described here also concern a table comprising a multilayer panel according to the invention, comprising a plurality of seatings disposed in correspondence with attachment points, in each of said seatings there being disposed a respective attachment element, a bearing structure provided with respective through holes in correspondence with the attachment points as above and a plurality of screws inserted in the through holes and screwed to respective internal threads of the attachment elements.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a lateral view of a multilayer panel according to embodiments described here;
- fig. 2 is a section view of a detail of a multilayer panel being installed on a support structure;
- fig. 3 is a perspective view of an attachment element of the multilayer panel;
- fig. 4 is a schematic perspective view of a multilayer panel as shown in fig. 1 with an indication of the attachment points and the points where forces are exerted;
- fig. 5 is a schematic lateral view of the multilayer panel of fig. 4;
- fig. 6 is a perspective view of the attachment element of fig. 3 in accordance with the invention; and
- fig. 7 is a section view of the detail of fig. 2 in accordance with the invention.

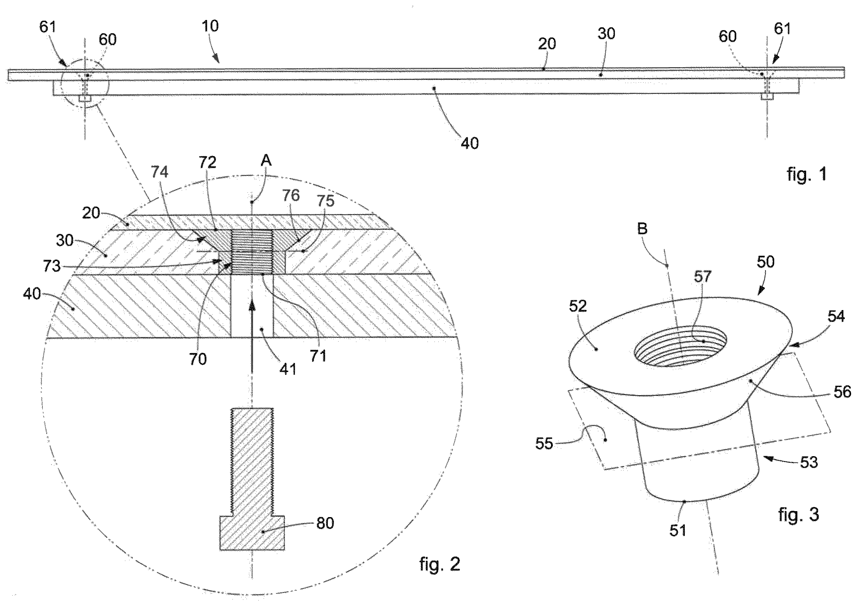

To facilitate comprehension, the same reference numbers have been used, where possible, to identify identical common elements in the drawings. It is understood that elements and characteristics of one embodiment can conveniently be combined or incorporated into other embodiments without further clarifications. The invention is defined in the appended claims. Any disclosure lying outside the scope of said claims is only intended for illustrative as well as comparative purposes. The embodiment shown in figures 2 and 3 is not covered by the claimed invention.

### DETAILED DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

Fig. 1 shows a multilayer panel, indicated as a whole with reference number 10.

The multilayer panel 10 is composed of at least one covering plate 20 and one reinforcing plate 30, the two plates 20, 30 being associated with each other. This association can be performed, for example, by gluing the plates 20, 30 with an adhesive substance.

Each plate 20, 30 comprises two surfaces opposite each other and delimited by one or more edges, depending on their shape. The two plates 20, 30 are associated in correspondence with a respective surface thereof. In other words, the association of the two plates 20, 30 is made by reciprocally associating one surface of the covering plate 20 with one surface of the reinforcing plate 30.

It is possible to provide that the panel 10 consists of several covering plates 20 and/or several reinforcing plates 30, depending on the uses for which the panel 10 is intended.

The multilayer panel 10 shown in the drawings is rectangular in shape; however, it is possible to provide that the panel 10 be of any shape whatsoever, for example square, circular or oval, without departing from the field and scope of this description.

The panel 10 is designed so that, when installed, the covering plate 20 is exposed to view, that is, it acts as a covering, and that the reinforcing plate 30 is oriented toward a bearing structure 40, to which the panel 10 is to be attached (figs. 1 and 2). The bearing structure 40 can be of any type whatsoever, depending on the intended use of the multilayer panel 10, for example a bracket to attach the panel 10 to a wall, legs for a table, or other.

The covering plate 20 is preferably made of glass, for example normal glass or tempered glass, but it can also be made of another material. The reinforcing plate 30 can also be made of glass, tempered or not, or other materials such as, for example, ceramic, plexiglass, other types of synthetic glass or suchlike. Preferably, the reinforcing plate 30 is made of a material which has characteristics of resistance equal to or greater than those of the covering plate 20.

In order to allow its attachment to a bearing structure 40, the multilayer panel 10 comprises one or more attachment elements 50, inserted or integrated therein. Each attachment element 50 is inserted in a respective insertion seating 60, and the seatings 60 are located in correspondence with as many predefined attachment points 61 according to the geometry and sizes of the multilayer panel 10, and/or its intended use.

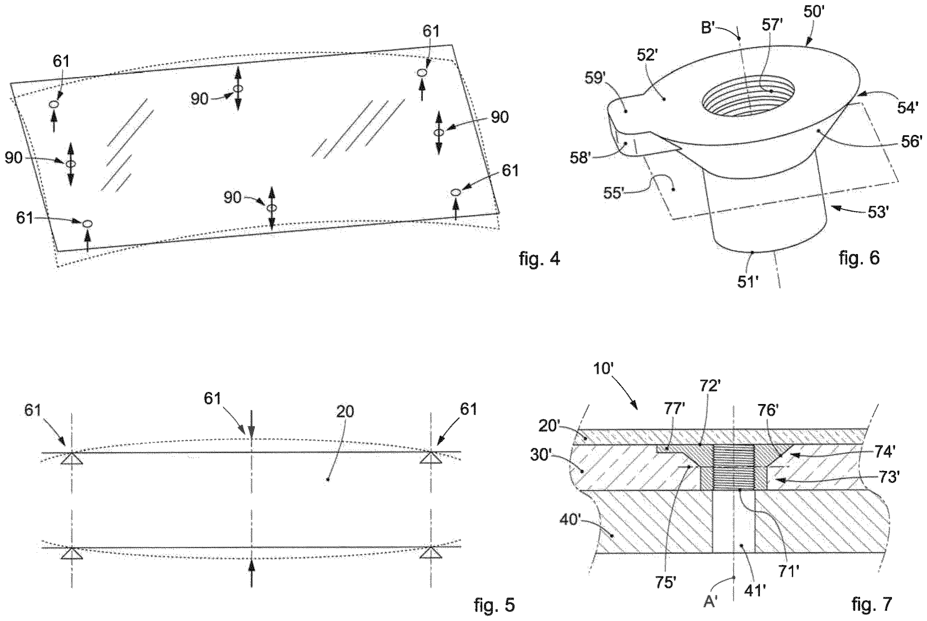

For example, as can be seen in figs. 1 and 4, in the case of a multilayer panel 10 with a rectangular shape, four attachment points 61 can be provided, for example in the proximity of the four corners of the panel 10, and in correspondence with which the seatings 60 have been made.

The positioning of the attachment points 61 is decided in a known manner.

Advantageously, the seatings 60 each comprise a positioning and clamping hole 70 of the attachment element 50, configured to position the attachment element and clamp it in the multilayer panel 10.

The positioning and clamping holes 70 are made only in the reinforcing plate 30, not in the covering plate 20. Thus, the covering plate 20, which is provided so as to be exposed to public view, is left intact, that is, without any modifications to its original appearance.

More preferably, the holes 70 are made through in the reinforcing plate 30. As such, they have their own axis of development A (fig. 2) and have an aperture 71 and a bottom 72. The aperture 71 is disposed in correspondence with the free surface of the reinforcing plate 30, that is, the surface that is not associated with the covering plate 20. The bottom 72, on the other hand, provides another aperture in correspondence with the surface of the reinforcing plate 30 associated with the covering plate 20.

Since the reinforcing plate 30 is associated with the covering plate 20, the bottom 72 of the hole 70 is closed by the covering plate 20 (fig. 2).

In accordance with some embodiments, the positioning and clamping hole 70 is divided into at least two portions 73, 74 which join in correspondence with an intermediate cross section 75. By intermediate cross section 75 we mean that this section is located between the aperture 71 and the bottom 72 of the seating, for example substantially halfway between these two ends of the hole 70.

The intermediate section 75 is advantageously a section transverse to the axis of development A of the hole 70, more advantageously it is perpendicular to the axis of development A.

The first portion 73 extends from the aperture 71 to the intermediate section 75, and the second portion 74 extends from the intermediate section 75 to the bottom 72 of the hole 70.

Advantageously, the second portion 74 is configured so as to form at least one abutment element to abut against at least one section or an abutment counter-element of the attachment element 50.

For example, it can be provided that the second portion 74 has at least one cross section with a lateral size greater than the lateral size in correspondence with the intermediate section 75. In this way, for example, a shoulder can be obtained in the second portion 74, or in correspondence with the intermediate section 75, which holds the attachment element 50.

In the example shown, the seating has a second portion 74 with a truncated cone shape, diverging from the intermediate section 75 to the bottom 72. The first portion 73, on the other hand, has a cylindrical shape. The latter can have another shape, as long as it allows the insertion of the attachment element 50, and preferably as it has at least one cross section with a lateral size greater than or equal to the intermediate section 75.

In this way, the second portion 74 has an internal wall 76 inclined with respect to the axis of development A, and which acts as an abutment element for the attachment element 50.

It should be noted that in the above example, since the portions 73, 74 have a cylindrical and truncated cone shape respectively, the lateral size corresponds to the diameter taken in a section perpendicular to the axis of development A. We wish to reiterate that the first portion 73 and the second portion 74 can have sections of any shape whatsoever depending on requirements, and can have different shapes from each other, so as to clearly separate the two portions 73, 74, or have shapes mating with each other so as to define a single overall shape of the seating 60.

For example, it can be provided that both the second portion 74 and also the first portion 73 have a truncated cone shape which, located one after the other, define a single conical or truncated conical shape of the seating 60.

Preferably, the attachment element 50 has a shape and sizes that correspond to the shape and sizes of the hole 70.

The attachment element 50 comprises a body that extends along an axis of development B between a first end 51 and a second end 52 (figs. 2 and 3). The attachment element 50 is configured so that, once installed in the hole 70, the first end 51 is located in correspondence with the aperture 71, and the second end 52 is located in the bottom 72 of the hole 70 (fig. 2). Preferably, the length of the attachment element 50, which is the distance between its two ends 51, 52 taken along the axis of development B, is equal to the thickness of the reinforcing plate 30, that is, the distance between the aperture 71 and the bottom 72 of the positioning and clamping hole 70 along the axis of development A.

In the event that several reinforcing plates 30 are present, the length of the attachment element 50 is preferably equal to the thickness of all the reinforcing plates 30.

Advantageously, also the attachment element 50 is divided into two portions 53, 54 which join in correspondence with an intermediate section 55 of the body. Preferably, the first portion 53 extends from the first end 51 to the intermediate section 55, and the second portion 54 extends from the intermediate section 55 to the second end 52 of the attachment element 50.

More advantageously, the first portion 53 of the attachment element 50 is configured to be inserted in the first portion 73 of the hole 70, and the second portion 54 of the attachment element 50 is configured to be inserted in the second portion 74 of the hole 70.

The second portion 54 of the attachment element 50 preferably comprises an element configured to interact with the abutment element of the second portion 74 of the hole 70. More preferably, the second portion 54 of the attachment element 50 has at least one section with a lateral size larger than the lateral size of the intermediate section 55.

Preferably, the attachment element 50 has the shape of a solid of revolution. More preferably, the hole 70 has a shape such as to house the attachment element 50 according to a same-shape coupling.

In the example shown, the second portion 54 of the attachment element 50 has a truncated cone shape and diverges from the intermediate section 55 toward the second end 52. The second portion 54 has an external wall 56 inclined with respect to the axis of development B of the attachment element 50, and which during use abuts against the internal wall 76 of the second portion 74 of the hole 70 (fig. 2).

In this case, therefore, the inclined internal wall 76 of the hole 70 constitutes the abutment element, and the inclined external wall 56 of the attachment element 50 constitutes the abutment counter-element. Obviously, other shapes and configurations of abutment element and counter-element can be provided.

As can be seen in fig. 2, the first and second portions 53, 54 of the attachment element 50 have a shape and sizes which correspond respectively to the shape and sizes of the first and second portions 73, 74 of the hole 70. It is therefore possible to perform a same-shape coupling between the attachment element 50 and the hole 70.

In the example shown, the attachment element 50 is of the bushing type. It comprises an internal thread 57 as an attachment element, made coaxial to the attachment element 50 and configured to be associated with a corresponding screw 80 (fig. 2) as an attachment counter-element.

The internal thread 57 preferably extends over the entire height of the attachment element 50.

The attachment elements 50 are advantageously made of a rigid and robust material, preferably softer than glass. For example, the attachment elements 50 are made of an aluminum alloy that can adapt to the shape of the glass.

According to some embodiments, the multilayer panel 10 also comprises an interlayer (not shown in the drawings) interposed between the covering plate 20 and the reinforcing plate 30. This interlayer can comprise a sheet of plastic material which is made to adhere to both the covering 20 and reinforcing 30 plates.

The plastic material can be, for example, polycarbonate, polyvinyl butyral and/or polyvinyl acetate or suchlike.

In addition to the advantages of integrating the attachment elements 50 and of the solidity of the attachment that they allow, compared to the state of the art, another advantage related to the present invention has been discovered.

It is known that glass plates can be heat treated in an oven at temperatures higher than 100°C, for example 140°C. During this heat treatment phase, the glass plates are deformed, even more so when they have a certain thinness or a certain geometric shape. In particular, the glass plates are curved or rounded, as shown schematically in figs. 4 and 5, in which the covering plate 20 is shown flat with a solid line and curved with a broken line, with the curvature deliberately enlarged, for illustrative purposes only. This curvature may be due to various factors, for example a coupling of two plates made of different materials that react differently to heat.

Generally, the rounding of the glass plate results from thrust or traction forces exerted in different thrust or traction points 90 typically disposed in intermediate positions between the attachment points 61.

It has been discovered that, surprisingly, the multilayer panel 10 as described above allows to perform an adjustment of the curvature of the glassplate, and therefore of the panel 10. In fact, with the idea underlying the present invention, it becomes possible to attach the panel 10 by means of screws, as in the example described above.

By acting on the screwing, it is possible to modulate the force applied in correspondence with the attachment points 61, for example in order to decrease the curvature of the panel. This allows, for example in the case of a table with a glass top, to also provide glass extensions that integrate better with the surface of the table itself.

It should be noted that any number of holes 70 and corresponding attachment elements 50 can be provided in the reinforcing plate 30. In particular, it is possible to provide bushings 50 that effectively serve to attach the multilayer panel 10 to a bearing structure 40 (also called constraints), but also bushings 50 that serve exclusively to modulate the traction and thrust forces undergone by the panel 10 (also called adjustment points). It is also possible to provide bushings 50 to attach other elements to the panel 10, such as for example attachment elements to attach the multilayer panel 10 to the bearing structure 40, instead of attaching it directly.

A method to mount a multilayer panel 10 according to the previous description is described below.

First of all, a covering plate 20 and a reinforcing plate 30 are provided, and possibly a sheet of plastic material as an interlayer.

Preferably, the reinforcing plate 30 is already provided with the positioning and clamping holes 70 which form the insertion seatings 60 for the attachment elements 50, and which have been made for example by means of drilling. More preferably, the holes 70 are as described above, and as shown in the drawings.

Some attachment elements 50 are also supplied, for example some bushings, the shape of which corresponds to the shape of the holes 70, and in a number equal to the number of holes 70.

Before reciprocally associating the covering 20 and reinforcing 30 plates, an attachment element 50 is inserted in each of the positioning and clamping holes 70.

Once the attachment elements 50 have been positioned, the interlayer sheet of plastic material, if provided, is placed on top of the reinforcing plate 30 in order to close the bottoms 72 of the holes 70, whereby completing the formation of the seatings 60. Subsequently, the covering plate 20 is placed on top and the plates 20, 30 are reciprocally joined.

We wish to point out that the reciprocal joining of the plates 20, 30 determines the closure of the bottom 72 of the holes 70, completing the formation of the seatings 60. At this point, the bushings 50 are kept in fixed positions on one side by the covering plate 20, which closes the bottom 72 of the hole 70, and on the other side by the internal wall 76 of the hole 70 which, since it is inclined, abuts against the external wall 56, also suitably inclined, of the bushing 50.

Once the plates 20, 30 have been joined, the panel 10 is ready to be mounted on a bearing structure 40. The latter is preferably provided with through holes 41 in correspondence with the attachment points, and disposed so as to correspond to the seatings 60 of the panel 10 (fig. 2).

The panel 10 is then placed on or against the bearing structure 40, taking care to align the through holes 41 of the bearing structure 40 with the threads 57 of the bushings 50. The attachment is carried out by inserting screws 80 in the threads 57, making them pass through the through holes 41 of the support structure 40 (fig. 2).

Preferably, the screws 80 are screwed so that the panel 10 is attached to the support structure 40 in a stable manner. It is also possible to provide to act (screw or unscrew) further in order to increase the forces on the panel 10 in correspondence with the attachment points 61, so as to contrast and decrease the curvature of the multilayer panel 10.

From the previous description it is clear that the present invention allows to equip a multilayer panel 10 with attachment elements 50 that are totally integrated, and disposed in a stable manner inside the panel. As well as not compromising the appearance of the covering plate, the solution underlying the invention allows an attachment of the multilayer panel 10 that is stable and durable over time.

The stability of the attachment is achieved at least because the bushings 50 are totally inserted in the reinforcing plate 30, and cannot move inside the holes 70. The fact that the bushings 50 and the holes 70 have corresponding shapes contributes to this advantageous aspect.

Figs. 6 and 7 show the embodiment of the invention. The elements in common with the first embodiment are not described again, and have the same reference numbers to which a single quote mark has been added.

According to the invention, the attachment element 50' and the positioning and clamping hole 70' are provided with respective rotation blocking means 58', 77', configured to engage with each other to block the attachment element 50' preventing a rotation thereof around its axis of development B'.

In accordance with the embodiment of the invention, the attachment element 50' comprises a rotation blocking member 58', suitable to prevent its rotation around its axis of development B'. This makes it much easier to insert screws in it. This solution is advantageous since the bushing 50', once inserted in its positioning hole 70', is no longer accessible to the operator, therefore its possible rotation cannot be blocked manually.

Preferably, the rotation blocking member 58' comprises a tooth that protrudes radially from the bushing 50', preferably from its second section 54'. In the example shown, the tooth has an upper surface 59' which protracts from the surface of the second end 52' of the bushing 50'. This form, although more advantageous, is not mandatory.

In the embodiment of the invention, the positioning and clamping hole 70' is provided with a rotation blocking seating 77' configured to accommodate the rotation blocking member 58', and to supply at least one abutment element in order to block its rotation around the axis B'. In the example shown, the rotation blocking seating 77' extends radially from the positioning and clamping hole 70', more preferably from its second portion 74'.

The rotation blocking seating 77' preferably has a shape that is complementary to the shape of the rotation blocking member 58', so as to obtain a same-shape coupling between them.

It is clear that modifications and/or additions of parts or steps may be made to the multilayer panel 10 and to the method as described heretofore, without departing from the field and scope of the present invention as defined by the claims.

In the following claims, the sole purpose of the references in brackets is to facilitate reading: they must not be considered as restrictive factors with regard to the field of protection claimed in the specific claims.

## Claims

1. Multilayer panel (10) comprising a covering plate (20), at least one reinforcing plate (30), and at least one attachment element (50, 50'), comprising at least one insertion seating (60) for said attachment element (50, 50'), said insertion seating (60) comprising a positioning and clamping hole (70, 70') of said attachment element (50, 50') made only in said reinforcing plate (30) and said attachment element (50, 50') being positioned in said positioning and clamping hole (70, 70') flush with, or at most recessed with respect to, an external surface of said reinforcing plate (30), said multilayer panel (10) being **characterized in that** said attachment element (50') and said positioning and clamping hole (70') are provided with respective rotation blocking means (58', 77'), configured to engage with each other to block the rotation of said attachment element (50') around an axis of development (B') thereof.

2. Multilayer panel (10) as in claim 1, **characterized in that** the positioning and clamping hole (70, 70') is through in the reinforcing plate (30).

3. Multilayer panel (10) as in claim 1 or 2, **characterized in that** the attachment element (50, 50') and the positioning and clamping hole (70, 70') have shapes that correspond to each other, so as to obtain a same-shape coupling.

4. Multilayer panel (10) as in any claim hereinbefore, **characterized in that** said attachment element (50') comprises a rotation blocking member (58') and said positioning and clamping hole (70') is provided with a rotation blocking seating (77') configured to accommodate said rotation blocking member (58').

5. Multilayer panel (10) as in any claim hereinbefore, **characterized in that** the positioning and clamping hole (70, 70') extends along an axis of development (A) between an aperture (71) and a bottom (72), and **in that** said bottom (72) is closed by the covering plate (20).

6. Multilayer panel (10) as in any claim hereinbefore, **characterized in that** the positioning and clamping hole (70, 70') extends along an axis of development (A) between an aperture (71) and a bottom (72), and **in that** it comprises a first portion (73) which extends between the aperture (71) and an intermediate cross section (75), and a second portion (74) which extends between said intermediate cross section (75) and the bottom (72), and of a different shape with respect to said first portion (73).

7. Multilayer panel (10) as in claim 6, **characterized in that** the second portion (74) is configured so as to form an abutment element to abut against an abutment counter-element of the attachment element (50, 50').

8. Multilayer panel (10) as in any claim hereinbefore, **characterized in that** the attachment element (50, 50') extends along an axis of development (B) between a first end (51) and a second end (52), and **in that** it comprises a first section (53) which extends between the first end (51) and an intermediate cross section (55), and a second portion (54) which extends between said intermediate cross section (55) and said second end (52), and of a different shape with respect to said first portion (54).

9. Multilayer panel (10) as in any claim hereinbefore, **characterized in that** the attachment element (50, 50') comprises a bushing provided with a threaded hole (57, 57') which extends for the entire height of said bushing.

10. Method to assemble a multilayer panel (10), comprising the steps of
- prearranging a covering plate (20);
- prearranging a reinforcing plate (30) provided with at least one positioning and clamping hole (70, 70');
- inserting an attachment element (50, 50') in said positioning and clamping hole (70, 70'), positioning it flush with, or at most recessed with respect to, an external surface of said reinforcing plate (30); and subsequently
- reciprocally associating said covering plate (20) and said reinforcing plate (30) so as to close said positioning and clamping hole (70, 70');
**characterized in that** during the insertion of the attachment element (50, 50') it provides to engage respective rotation blocking means (58', 77) with each other, provided respectively on the attachment element (50') and in the positioning and clamping hole (70'), in order to prevent a rotation of said attachment element (50') around an axis of development thereof.

11. Method as in claim 10, **characterized in that** the attachment element (50, 50') comprises a bushing provided with a threaded hole (57, 57') which extends for the entire height of said bushing.

12. Table comprising a multilayer panel (10) as in any claim from 1 to 9, comprising a plurality of seatings (60) disposed in correspondence with attachment points (61), in each of which there is disposed a respective attachment element (50, 50'), a bearing structure (40) provided with respective through holes (41) in correspondence with said attachment points (61), and a plurality of screws (80) inserted in said through holes (41) and screwed to respective internal threads (57, 57') of said attachment elements (50, 50).

## Patentansprüche

1. Mehrschichtiges Paneel (10) mit einer Abdeckplatte (20), mindestens einer Verstärkungsplatte (30) und mindestens einem Anbringungselement (50, 50'), mit mindestens einem Einfügesitz (60) für das Anbringungselement (50, 50'), wobei der Einfügesitz (60) ein Positionierungs- und Klemmloch (70, 70') des Anbringungselements (50, 50') umfasst, das nur in der Verstärkungsplatte (30) ausgebildet ist, und wobei das Anbringungselement (50, 50') in dem Positionierungs- und Klemmloch (70, 70') mit einer Außenfläche der Verstärkungsplatte (30) bündig oder höchstens mit Bezug auf diese ausgespart positioniert ist, wobei die mehrschichtige Platte (10) **dadurch gekennzeichnet ist, dass**
das Anbringungselement (50') und das Positionierungs- und Klemmloch (70') mit entsprechenden Rotationssperrmitteln (58', 77') bereitgestellt sind, die so beschaffen sind, dass sie ineinander eingreifen, um die Drehung des Anbringungselements (50') um seine Entwicklungsachse (B') zu blockieren.

2. Mehrschichtiges Paneel (10) nach Anspruch 1, **dadurch gekennzeichnet, dass** das Positionierungs- und Klemmloch (70, 70') in der Verstärkungsplatte (30) durchgehend ausgebildet ist.

3. Mehrschichtiges Paneel (10) nach Anspruch 1 oder 2, **dadurch gekennzeichnet, dass** das Anbringungselement (50, 50') und das Positionierungs- und Klemmloch (70, 70') Formen aufweisen, die einander entsprechen, um eine formschlüssige Kopplung zu erhalten.

4. Mehrschichtiges Paneel (10) nach einem der vorangehenden Ansprüche, **dadurch gekennzeichnet, dass** das Anbringungselement (50') ein Rotationssperrelement (58') aufweist und das Positionierungs- und Klemmloch (70') mit einem Rotationssperrsitz (77') bereitgestellt ist, der so konfiguriert ist, dass er das Rotationssperrelement (58') aufnehmen kann.

5. Mehrschichtiges Paneel (10) nach einem der vorangehenden Ansprüche, **dadurch gekennzeichnet, dass** sich das Positionierungs- und Klemmloch (70, 70') entlang einer Entwicklungsachse (A) zwischen einer Öffnung (71) und einem Boden (72) erstreckt, und dass der Boden (72) durch die Abdeckplatte (20) verschlossen ist.

6. Mehrschichtiges Paneel (10) nach einem der vorangehenden Ansprüche, **dadurch gekennzeichnet, dass** sich das Positionierungs- und Klemmloch (70, 70') entlang einer Entwicklungsachse (A) zwischen einer Öffnung (71) und einem Boden (72) erstreckt und dass es einen ersten Abschnitt (73), der sich zwischen der Öffnung (71) und einem Zwischenquerschnitt (75) erstreckt, und einen zweiten Abschnitt (74) hat, der sich zwischen dem Zwischenquerschnitt (75) und dem Boden (72) erstreckt und mit Bezug auf den ersten Abschnitt (73) eine andere Form aufweist.

7. Mehrschichtiges Paneel (10) nach Anspruch 6, **dadurch gekennzeichnet, dass** der zweite Abschnitt (74) so konfiguriert ist, dass er ein Anschlagelement ausbildet, das an einem Gegenelement des Anbringungselements (50, 50') anliegt.

8. Mehrschichtiges Paneel (10) nach einem der vorangehenden Ansprüche, **dadurch gekennzeichnet, dass** sich das Anbringungselement (50, 50') entlang einer Entwicklungsachse (B) zwischen einem ersten Ende (51) und einem zweiten Ende (52) erstreckt, und dass es einen ersten Abschnitt (53), der sich zwischen dem ersten Ende (51) und einem Zwischenquerschnitt (55) erstreckt, und einen zweiten Abschnitt (54) hat, der sich zwischen dem Zwischenquerschnitt (55) und dem zweiten Ende (52) erstreckt und mit Bezug auf den ersten Abschnitt (54) eine andere Form aufweist.

9. Mehrschichtiges Paneel (10) nach einem der vorangehenden Ansprüche, **dadurch gekennzeichnet, dass** das Anbringungselement (50, 50') eine Buchse hat, die mit einem Gewindeloch (57, 57') bereitgestellt ist, das sich über die gesamte Höhe der Buchse erstreckt.

10. Verfahren zum Zusammenbau eines mehrschichtigen Paneels (10), das die folgenden Schritte aufweist
- Vorbereiten einer Abdeckplatte (20);
- Vorbereiten einer Verstärkungsplatte (30), die mit mindestens einem Positionierungs- und Klemmloch (70, 70') bereitgestellt ist;
- Einsetzen eines Anbringungselements (50, 50') in das Positionierungs- und Klemmloch (70, 70'), Positionieren desselben bündig mit oder am stärksten ausgespart mit Bezug auf eine Außenfläche der Verstärkungsplatte (30); und anschließend
- wechselseitiges in Verbindung bringen der Abdeckplatte (20) und der Verstärkungsplatte (30), um das Positionierungs- und Klemmloch (70, 70') zu schließen;
**dadurch gekennzeichnet, dass** es während des Einsetzens des Anbringungselements (50, 50') dafür sorgt, dass entsprechende Rotationssperrmittel (58', 77) miteinander in Eingriff geraten, die an dem Anbringungselement (50') bzw. in dem Positionierungs- und Klemmloch (70') bereitgestellt sind, um eine Drehung des Anbringungselements (50') um dessen Entwicklungsachse zu verhindern.

11. Verfahren nach Anspruch 10, **dadurch gekennzeichnet, dass** das Anbringungselement (50, 50') eine Buchse hat, die mit einem Gewindeloch (57, 57') bereitgestellt ist, das sich über die gesamte Höhe der Buchse erstreckt.

12. Tisch mit einem mehrschichtigen Paneel (10) nach einem der Ansprüche 1 bis 9, mit einer Vielzahl von Sitzen (60), die in Bezug auf Anbringungspunkte (61) angeordnet sind, in denen jeweils ein entsprechendes Anbringungselement (50, 50') angeordnet ist, einer Lagerstruktur (40), die mit entsprechenden Durchgangslöchern (41) in Bezug auf die Anbringungspunkte (61) versehen ist, und einer Vielzahl von Schrauben (80), die in die Durchgangslöcher (41) eingesetzt und mit entsprechenden Innengewinden (57, 57') der Anbringungselemente (50, 50) verschraubt sind.

## Revendications

1. Panneau multicouche (10) comportant une plaque de recouvrement (20), au moins une plaque de renfort (30) et au moins un élément de fixation (50, 50'), comportant au moins un logement d'insertion (60) pour ledit élément de fixation (50, 50'), ledit logement d'insertion (60) comportant un trou de positionnement et de serrage (70, 70') dudit élément de fixation (50, 50') réalisé uniquement dans ladite plaque de renfort (30) et ledit élément de fixation (50, 50') étant positionné dans ledit trou de positionnement et de serrage (70, 70') affleurant une surface externe de ladite plaque de renfort (30) ou tout au plus en retrait par rapport à celle-ci, ledit panneau multicouche (10) étant **caractérisé en ce que** ledit élément de fixation (50') et ledit trou de positionnement et de serrage (70') sont pourvus de moyens respectifs de blocage en rotation (58', 77'), configurés pour venir en prise l'un avec l'autre pour bloquer la rotation dudit élément de fixation (50') autour d'un axe de développement (B') de celui-ci.

2. Panneau multicouche (10) selon la revendication 1, **caractérisé en ce que** le trou de positionnement et de serrage (70, 70') passe à travers la plaque de renforcement (30).

3. Panneau multicouche (10) selon la revendication 1 ou 2, **caractérisé en ce que** l'élément de fixation (50, 50') et le trou de positionnement et de serrage (70, 70') ont des formes qui correspondent l'une à l'autre, de manière à obtenir un couplage de formes identiques.

4. Panneau multicouche (10) selon l'une quelconque des revendications précédentes, **caractérisé en ce que** ledit élément de fixation (50') comporte un élément de blocage en rotation (58') et ledit trou de positionnement et de serrage (70') est pourvu d'un logement de blocage en rotation (77') configuré pour recevoir ledit élément de blocage en rotation (58').

5. Panneau multicouche (10) selon l'une quelconque des revendications précédentes, **caractérisé en ce que** le trou de positionnement et de serrage (70, 70') s'étend le long d'un axe de développement (A) entre une ouverture (71) et un fond (72), et **en ce que** ledit fond (72) est fermé par la plaque de recouvrement (20).

6. Panneau multicouche (10) selon l'une quelconque des revendications précédentes, **caractérisé en ce que** le trou de positionnement et de serrage (70, 70') s'étend le long d'un axe de développement (A) entre une ouverture (71) et un fond (72), et **en ce qu'**il comporte une première partie (73) qui s'étend entre l'ouverture (71) et une section transversale intermédiaire (75), et une seconde partie (74) qui s'étend entre ladite section transversale intermédiaire (75) et le fond (72), et d'une forme différente par rapport à ladite première partie (73).

7. Panneau multicouche (10) selon la revendication 6, **caractérisé en ce que** la seconde partie (74) est configurée de manière à former un élément de butée pour venir en butée contre un contre-élément de butée de l'élément de fixation (50, 50').

8. Panneau multicouche (10) selon l'une quelconque des revendications précédentes, **caractérisé en ce que** l'élément de fixation (50, 50') s'étend le long d'un axe de développement (B) entre une première extrémité (51) et une seconde extrémité (52), et **en ce qu'**il comporte une première partie (53) qui s'étend entre la première extrémité (51) et une section transversale intermédiaire (55), et une seconde partie (54) qui s'étend entre ladite section transversale intermédiaire (55) et ladite seconde extrémité (52), et d'une forme différente par rapport à ladite première partie (54).

9. Panneau multicouche (10) selon l'une quelconque des revendications précédentes, **caractérisé en ce que** l'élément de fixation (50, 50') comporte une douille pourvue d'un trou taraudé (57, 57') qui s'étend sur la hauteur complète de ladite douille.

10. Procédé pour assembler un panneau multicouche (10), comportant les étapes consistant à :
- pré-agencer une plaque de recouvrement (20),
- pré-agencer une plaque de renfort (30) pourvue d'au moins un trou de positionnement et de serrage (70, 70'),
- insérer un élément de fixation (50, 50') dans ledit trou de positionnement et de serrage (70, 70'), le positionner de manière affleurante à une surface externe de ladite plaque de renfort (30) ou tout au plus en retrait par rapport à celle-ci, et ensuite
- associer réciproquement ladite plaque de recouvrement (20) et ladite plaque de renfort (30) de manière à fermer ledit trou de positionnement et de serrage (70, 70'),
**caractérisé en ce que**, pendant l'insertion de l'élément de fixation (50, 50'), il est prévu de mettre en prise des moyens respectifs de blocage en rotation (58', 77) l'un avec l'autre, prévus respectivement sur l'élément de fixation (50') et dans le trou de positionnement et de serrage (70'), afin d'empêcher une rotation dudit élément de fixation (50') autour d'un axe de développement de celui-ci.

11. Procédé selon la revendication 10, **caractérisé en ce que** l'élément de fixation (50, 50') comporte une douille pourvue d'un trou taraudé (57, 57') qui s'étend sur la hauteur complète de ladite douille.

12. Table comportant un panneau multicouche (10) selon l'une quelconque des revendications 1 à 9, comportant une pluralité de logements (60) disposés en correspondance avec des points de fixation (61), dans chacun desquels est disposé un élément de fixation (50, 50') respectif, une structure d'appui (40) pourvue de trous traversants (41) respectifs en correspondance avec lesdits points de fixation (61), et une pluralité de vis (80) insérées dans lesdits trous traversants (41) et vissées à des filetages intérieurs (57, 57') respectifs desdits éléments de fixation (50, 50).
